# EUROPÄISCHE PATENTANMELDUNG

(11) **EP 0 553 943 A1**
(43) Veröffentlichungstag der Anmeldung: **04.08.1993**
(21) Anmeldenummer: 93250020.0
(22) Anmeldetag: 19.01.1993
(51) Int. Cl.: G01N 17/00, B06B 1/06, G01N 29/24

(54) **Prüfkopf zur zerstörungsfreien Prüfung**

(30) Priorität: 31.01.1992 DE 4203295
(71) Anmelder: MANNESMANN Aktiengesellschaft, D-40027 Düsseldorf (DE)
(72) Erfinder: Arzi, Norbert, W-5010 Bergheim (DE); Haacke, Harri, W-4030 Ratingen (DE)
(74) Vertreter: Meissner, Peter E., Dipl.-Ing.

(57) **Zusammenfassung**

Die Erfindung betrifft einen Prüfkopf zur zerstörungsfreien Prüfung von relativ dazu sich bewegenden Werkstücken mit einer in der dem Werkstück zugewandten Stirnfläche angeordneten Sonde, die auf der dem Werkstück zugewandten Seite eine Verschleißschutzschicht aufweist, die während des Prüfvorganges mit der Werkstückoberfläche ständig in Berührung ist oder in Berührung kommen kann.
Um für einen Prüfkopf, dessen nahe an der Stirnfläche angeordnete Sonden bzw. Spulensysteme sicher geschützt werden sollen, eine Verschleißschutzschicht zu entwickeln, deren Abnutzungsgrad in einfacher Weise überwacht werden kann, wird vorgeschlagen, daß die Verschleißschutzschicht 6 im Berührungsbereich in Dickenrichtung gesehen in wenigstens zwei Schichten 7 und 8 unterteilt ist und der Abtrag einer oder mehrerer Schichten als Warnsignal für das Erreichen eines kritischen Abnutzungsgrades verwendet wird.

## Beschreibung

Die Erfindung betrifft einen Prüfkopf zur zerstörungsfreien Prüfung von relativ dazu sich bewegenden Werkstücken gemäß dem Gattungsbegriff des Hauptanspruches.

Neben den Prüfköpfen, die für die Ankopplung von Ultraschall an das zu prüfende Werkstück ein Koppelmittel beispielsweise Wasser benötigen, gibt es auch Prüfköpfe, die koppelmittelfrei arbeiten. Solche Prüfköpfe sind beispielsweise sogenannte EMUS-Wandler (GB-2006433), Streufluß- oder Wirbelstromsonden. Allen diesen genannten Prüfköpfen ist gemeinsam, daß die hochempfindlichen Sonden so dicht wie möglich an die Oberfläche des Werkstückes herangeführt werden müssen, da ansonsten das Meß- bzw. Echosignal zu gering wäre. Um der Forderung nach möglichst kleinem Abstand zu genügen, wird der Prüfkopf entweder unmittelbar auf die Oberfläche des zu prüfenden Werkstückes aufgesetzt oder in geringem Abstand zur Werkstückoberflache geführt und die Sonde in dem dem Werkstück zugewandten Stirnflächenbereich des Prüfkopfes angeordnet. Damit die teueren und empfindlichen Sonden bei eventuellen Berührungen mit der Werkstückoberfläche nicht zerstört werden ist es bekannt, sie mit einem Verschleißschutz, der im Falle der EMUS- und Wirbelstromtechnik nicht oder nur schwach elektrisch leitend sein darf, z. B. einer Keramikscheibe (GB-2006433) abzudecken. Solche Keramikscheiben sind wegen ihrer großen Härte sehr verschleißfest, aber auch spröde, so daß es bei schlagartiger Beanspruchung zum Bersten der Scheibe kommen kann. Bei diesem Bersten werden auch in den meisten Fällen die teueren und empfindlichen Sonden bzw. das Spulensystem zerstört. Statt einer Scheibe aus Keramik werden auch verschiedene Kunststoffe oder Laminate als Verschleißwerkstoff verwendet. Die Verschleißrate ist bei Kunststoffen aber sehr hoch, so daß es ohne Vorwarnung zu einer Unterschreitung einer kritischen Restdicke kommen kann. Dies hat zur Folge, daß bei Verwendung von Kunststoffen zwar ein Bersten der Verschleißschutzschicht vermieden wird, aber eine Zerstörung der Sonden dennoch nicht ausgeschlossen ist, da eine kritische Abnutzung nicht angezeigt wird.

Aufgabe der Erfindung ist es, für einen Prüfkopf zur zerstörungsfreien Prüfung von relativ dazu sich bewegenden Werkstücken, dessen nahe an der Stirnfläche angeordnete Sonden bzw. Spulensysteme sicher geschützt werden sollen, eine Verschleißschutzschicht zu entwickeln,, deren Abnutzungsgrad in einfacher Weise überwacht werden kann.

Diese Aufgabe wird mit den im kennzeichnenden Teil des Anspruches 1 angegebenen Merkmalen gelöst. Vorteilhafte Weiterbildungen sind Bestandteil von Unteransprüchen.

Erfindungsgemäß und im Unterschied zum bekannten Stand der Technik wird die überwachung des Abnutzungsgrades auf den Berührungsbereich der Verschleißschutzschicht konzentriert. Die Verschleißschutzschicht wird in Dickenrichtung gesehen in wenigstens zwei Schichten unterteilt und der Abtrag einer oder mehrerer Schichten als Warnsignal für das Erreichen eines kritischen Abnutzungsgrades verwendet. Bei einer ersten sehr einfachen Ausführungsform wird eine Teildicke der Schutzschicht eingefärbt und der Abnutzungsgrad z. B. nach jedem Prüfzyklus visuell überwacht. Dabei ist es unerheblich, welche der beiden Schichten eingefärbt und welche in der Ausgangsfarbe belassen wird. Zur Erhöhung des Kontrastes kann es vorteilhaft sein, beide Schichten einzufärben. In jedem Fall wird der Abtrag derjenigen Schicht, die der Werkstückoberfläche zugewandt ist, beobachtet, um beim Erkennen erster Flächenelemente der darauffolgenden anders gefärbten Schicht als Signal für die umgehende Auswechslung der Verschleißschutzschicht benutzt. Man kann dieses Prinzip der Einfärbung auch für eine feinfühligere Abstufung verwenden, indem vor Erreichen der notwendigen verbleibenden Restdicke zum Schutz der Sonde eine anders gefärbte Zwischenschicht angeordnet wird.

Bei einer weiteren Ausführungsform wird in einer der weiter innen liegenden Schichten ein Indikatorelement in die Schutzschicht eingebettet. Dies können farblich sich abhebende kleine Körper aus dem gleichen Material oder kleine Elemente aus anderen Werkstoffen sein. Wesentlich ist nur, daß nach Abtrag der ersten Verschleißschicht die eingebetteten Indikatoren gut sichtbar sind, damit sie als Frühwarnsystem wirksam sind.

Um von der visuellen Kontrolle unabhängig zu sein, wird weiterbildend vorgeschlagen, als Indikator eine Drahtschleife zu verwenden, deren freie Enden mit einem Anzeigegerät verbindbar sind. Wird nach Abtrag der ersten Verschleißschicht an irgendeiner Stelle die Drahtschleife durch den Abrieb beschädigt, steigt der Widerstand ins Unendliche und das Anzeigegerät zeigt einen entsprechenden Ausschlag. Auch hier ist es möglich, beispielsweise zwei Drahtschleifen in unterschiedlicher Tiefe anzuordnen, wobei die Zerstörung der ersten Drahtschleife ein erstes Vorwarnsignal sein soll, daß schon bald eine Auswechselung der Verschleißschutzschicht erforderlich ist.

In der Beschreibungseinleitung wurde schon darauf hingewiesen, daß bei Verwendung von Keramikscheiben ein Bruch ohne Vorwarnung eintreten kann, so daß die bereits vorgeschlagenen Maßnahmen hier unwirksam wurden. Aus diesem Grunde hat es sich als vorteilhaft erwiesen, die Verschleißschutzschicht aus einem faserverstärkten Kunststoff herzustellen. Dabei kann es sich um glasfaser- oder kohlefaserverstärkte Kunststoffe handeln oder ähnlich aufgebaute Laminate. Diese Laminate haben gegenüber dem reinen Kunststoff den Vorteil einer längeren Haltbarkeit und zeigen keine Neigung zum Sprödbruch wie Keramikscheiben. In Verbindung mit den vorgeschlagenen Maßnahmen zur Früherkennung eines kritischen Abnutzungsgrades ist die erfindungsgemäße Verschleißschutzschicht ideal für alle Prüfköpfe geeignet, die berührend oder mit geringem Abstand auf das Werkstück aufgesetzt werden und deren Sonden aus meßtechnischen Gründen dicht unterhalb der Stirnfläche der Prüfköpfe angeordnet sind.

In der Zeichnung wird anhand einiger Ausführungsbeispiele die erfindungsgemäße Verschleißschutzschicht näher erläutert.
Es zeigen:
- Figur 1: einen Teilquerschnitt durch einen geschützten Sondenbereich eines Prüfkopfes nach dem Stand der Technik
- Figur 2: einen Teilquerschnitt durch einen Sondenbereich mit der erfindungsgemäßen Verschleißschutzschicht
- Figur 3: wie Fig. 2 jedoch eine andere Ausführungsform
- Figur 4: eine perspektivische Darstellung einer erfindungsgemäßen Verschleißschutzschicht mit Drahtschleife
- Figur 5: ähnlich Figur 2, jedoch eine andere Ausführungsform

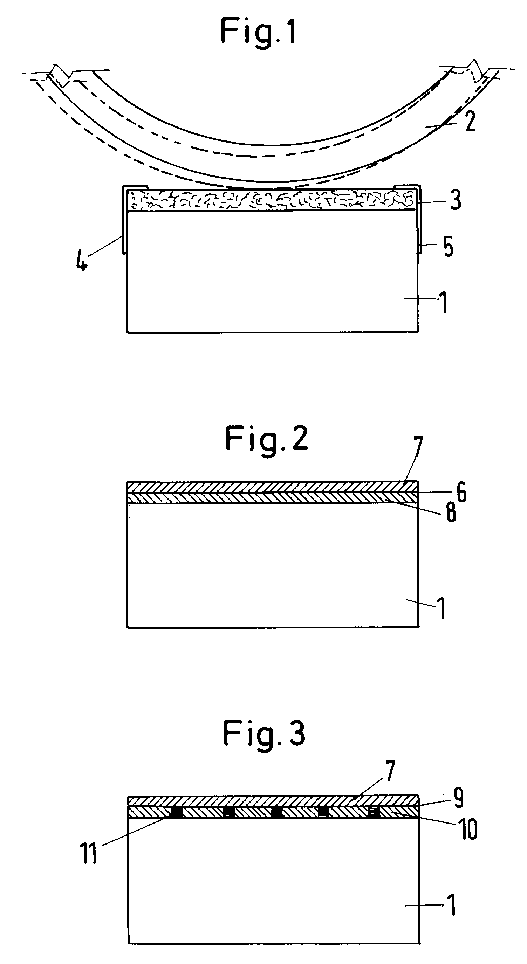

Figur 1 zeigt einen Teilquerschnitt des geschützten Sondenbereiches 1 eines Prüfkopfes nach dem Stand der Technik. In diesem hier dargestellten Beispiel ist der Sondenbereich 1 zeichnerisch nur angedeutet unter Weglassung aller sonstigen Details. Die dem zu prüfenden Werkstück 2 zugewandte Seite des Sondenbereiches 1 ist beispielsweise durch eine Keramikscheibe 3 abgedeckt. Die Abdeckung kann auch durch eine aus einem anderen Werkstoff hergestellte Scheibe erfolgen. Die Befestigung der Schutzschicht 3 an den Sondenbereich 1 erfolgt hier durch zwei Bleche 4,5. Alternativ gibt es auch die Möglichkeit, die Schutzschicht 3 mit einem Kleber direkt am Sondenbereich 1 zu befestigen.

Figur 2 zeigt im gleichen Teilquerschnitt wie Figur 1 den Sondenbereich 1 mit der erfindungsgemäßen Verschleißschutzschicht 6. Diese besteht in Dickenrichtung gesehen aus zwei Schichten 7,8, die beispielsweise unterschiedlich eingefärbt sind. Zur Verdeutlichung der Trennung in zwei Schichten 7,8 sind diese schraffiert gezeichnet worden. Man kann sich nun sehr leicht vorstellen, daß nach Abtrag der ersten Schicht 7 zu irgendeinem Zeitpunkt Flächenelemente der zweiten Schicht 8 durchschimmern und dies visuell erfaßt wird. Dabei soll die hier gezeichnete Dicke der zweiten, weiter innenliegenden Schicht 8 die erforderliche Restdicke darstellen, um die dahinterliegenden empfindlichen Sonden bzw. Spulensysteme vor der Zerstörung zu schützen.

Eine andere Ausführungsform des erfindungsgemäßen Prinzips ist in Figur 3 dargestellt. Auch hier besteht die Verschleißschutzschicht 9 aus zwei Schichten 7,10, wobei in der zweiten, weiter innen liegenden Schicht 10 Indikatorelemente eingebettet sind. Dies können farblich unterscheidbare Körper aus dem gleichen Material oder stark kontrastierende Elemente aus anderen Werkstoffen sein. Der Frühwarnmechanismus ist der gleiche wie in Figur 2 schon beschrieben.

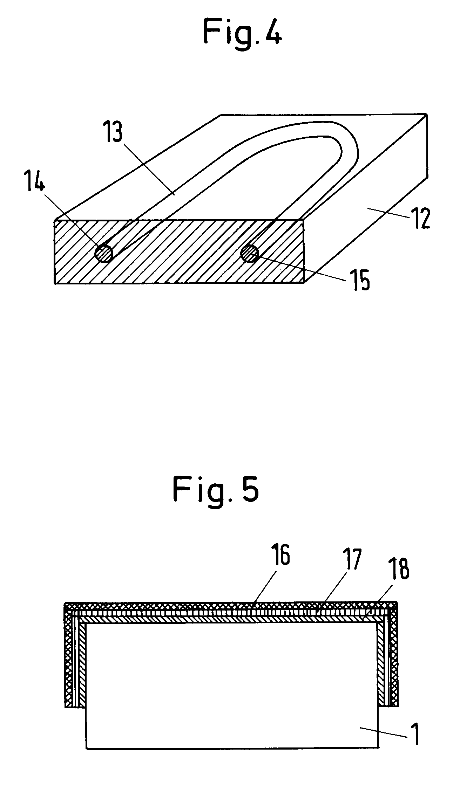

Ein anderer Weg wird gemäß der Figur 4 dargestellten Ausführungsform beschritten. Um von der visuellen Kontrolle unabhängig zu sein, ist in der Verschleißschutzschicht 12 eine Drahtschleife 13 eingebettet worden. Die freien Enden 14,15 dieser Drahtschleife 13 sind nach außen geführt und können mit einem Anzeigegerät (hier nicht dargestellt) verbunden werden. Wird nun die oberste Schicht der Verschleißschutzschicht 12 abgetragen, kommt es an irgendeiner Stelle zur Zerstörung des Drahtelmentes 13. Diese Zerstörung wird bei der nächsten zyklisch anfallenden Kontrolle vom Meßgerät angezeigt. Der Prüfer weiß dann, daß die verbleibende Restdicke der Verschleißschutzschicht 12 einen kritischen Wert erreicht hat, der es ratsam erscheinen läßt, diese Verschleißschutzschicht 12 auszuwechseln.

Das in den Figuren 2 bis 4 dargestellte Prinzip der Früherkennung einer kritischen Restdicke der Verschleißschutzschicht ist erst einmal unabhängig vom Werkstoff. Als besonders vorteilhaft hat sich aber ein faserverstärkter Kunststoff herausgestellt, wobei die Verstärkung beispielsweise eine Glas- oder Kohlefaser sein kann. Wird nun die Verschleißschutzschicht entsprechend wie in Figur 2 dargestellt ausgebildet, dann kann sie unmittelbar auf den Sondenbereich 1 zum Beispiel durch Kleben befestigt werden. Man kann sie aber auch wie in Figur 5 dargestellt als Formteil ausbilden, das über den Sondenbereich 1 gestülpt wird und mit diesem durch Befestigungselemente oder durch Formschluß in Verbindung steht. Zusätzlich ist in dieser Figur 5 die Variante mit drei Schichten 16,17,18 dargestellt. Dabei übernimmt die Zwischenschicht 17 eine Vorwarnfunktion, die es erlaubt, erst einmal noch weiter zu prüfen, bis die kritische Restdicke hier durch die Schicht 18 dargestellt, erreicht ist.

## Patentansprüche

1. Prüfkopf zur zerstörungsfreien Prüfung von relativ dazu sich bewegenden Werkstücken mit einer Sonde, deren Spulen bzw. Spulensysteme nahe der dem Werkstück zugewandten Stirnfläche der Sonde angeordnet sind und die auf der dem Werkstück zugewandten Seite eine Verschleißschutzschicht aufweist, die während des Prüfvorganges mit der Werkstückoberfläche ständig in Berührung ist oder in Berührung kommen kann,
dadurch gekennzeichnet,
daß die Verschleißschutzschicht (6, 9, 12) im Berührungsbereich in Dickenrichtung gesehen in wenigstens zwei Schichten (7, 8, 10, 11, 16, 17, 18) unterteilt ist und der Abtrag einer oder mehrerer Schichten als Warnsignal für das Erreichen eines kritischen Abnutzungsgrades verwendet wird.

2. Prüfkopf nach Anspruch 1,
dadurch gekennzeichnet,
daß die Schichten (7, 8) eine unterschiedliche Farbe aufweisen.

3. Prüfkopf nach Anspruch 1,
dadurch gekennzeichnet,
daß in einer der weiter innen liegenden Schichten (10) ein Indikatorelement (11) eingebettet ist.

4. Prüfkopf nach Anspruch 3,
dadurch gekennzeichnet,
daß der Indikator (11) als farblich stark kontrastierender Körper ausgebildet ist.

5. Prüfkopf nach Anspruch 3,
**dadurch gekennzeichnet,**
daß der Indikator als Drahtschleife (13) ausgebildet ist, deren freie Enden (14,15) mit einem Anzeigegerät verbindbar sind.

6. Prüfkopf nach einem der Ansprüche 1 bis 5,
**dadurch gekennzeichnet,**
daß die Verschleißschutzschicht (6,9,12,16,17,18) aus einem faserverstärkten laminierten Werkstoff besteht.

7. Prüfkopf nach Anspruch 6,
**dadurch gekennzeichnet,**
daß die Verschleißschutzschicht (6,9) direkt mit der Sonde (1) verbunden ist.

8. Prüfkopf nach Anspruch 6,
**dadurch gekennzeichnet,**
daß die Verschleißschutzschicht als ein über die Sonde (1) stülpbares Formteil ausgebildet ist.
